# EUROPEAN PATENT SPECIFICATION

(11) **EP 3 895 390 B1**
(45) Date of publication and mention of the grant of the patent: **23.09.2026**
(21) Application number: 18942690.1
(22) Date of filing: 14.12.2018
(51) Int. Cl.: H04L 45/00, H04L 45/64

(54) **SERVICE CHAINING MECHANISM FOR DATA FLOW PROCESSING**
DIENSTVERKETTUNGSMECHANISMUS FÜR DATENFLUSSVERARBEITUNG
MÉCANISME DE CHAÎNAGE DE SERVICES POUR TRAITER UN FLUX DE DONNÉES

(43) Date of publication of application: 20.10.2021
(73) Proprietor: Nokia Solutions and Networks Oy, 02610 Espoo (FI)
(72) Inventor: LV, Xiaopeng, Shanghai 201206 (CN); WAN, Yonggen, Shanghai 201206 (CN)
(74) Representative: DREISS Patentanwälte PartG mbB
(86) International application number: PCT/CN2018/121204
(87) International publication number: WO 2020/118689

(56) References cited:
- WO-A1-2018/058677
- CN-A- 103 841 056
- KR-A- 20160 002 155
- US-A1- 2015 319 078
- US-A1- 2015 381 478
- US-B2- 9 742 589

## Description

### FIELD

Embodiments of the present disclosure generally relate to the field of telecommunication and in particular, to a service chaining mechanism for data flow processing.

### BACKGROUND

In order to better adapt to the evolution of the internet, Information Centric Network (ICN) is proposed, which shifts the network communication from a host centric approach to an information centric approach, to disseminate the rapidly increased multi-media content. The Named Data Network (NDN) is the most notable architecture in information centric networking, which disseminates the content by means of the named object, the name-based routing and the in-network cache with the benefit to natively and efficiently support any-cast, multicast, mobility, content security and minimized latency and bandwidth consumption etc.

Regarding the routing, the Software Defined Network (SDN) centralized routing may be used in the ICN. The integration of SDN and ICN is implemented as software defined ICN. With the comprehensive topology view of the nodes and the named objects in the network, the centralized SDN controller can easily calculate the routing information and populate the route to the Forwarding Information Base (FIB) of the underlying ICN nodes via OpenFlow flexibly. Besides the named content, information centric networking can also be used to address the named function in the network, and even to request and retrieve the function code to the local ICN node and execute the function. Meanwhile, the ICN nodes may be implemented as a function execution platform having the capability of storage and virtualization etc. However, for some time critical service in both ICN and SDN, the path for routing the data flow may need to be further optimized. US 9 742 689 B2 discloses techniques for realizing service chaining. WO 2018/058677 A1 discloses a message processing method, a computing device and a message processing device.

### SUMMARY

In general, example embodiments of the present disclosure provide a solution for a service chaining mechanism for data flow processing, as defined by independent claims 1,5,8,13,17 and 18. Further embodiments are defined by their respective dependent claims. 1.

### BRIEF DESCRIPTION OF THE DRAWINGS

Some example embodiments will now be described with reference to the accompanying drawings, where:
FIG. 1 shows a conventional network 100;
FIG.2 shows a conventional forwarding engine for the network node in the network of FIG. 1;
FIG. 3 shows a conventional network 300 with a Software Defined Network (SDN) controller;
FIG. 4 shows an example network 400 in which example embodiments of the present disclosure can be implemented;
FIG. 5 shows a flowchart of an example method 500 for data flow processing according to some example embodiments of the present disclosure;
FIG. 6 shows a flowchart of an example method 600 for data flow processing according to some example embodiments of the present disclosure;
FIG. 7 shows a diagram of an example process for data flow processing in an ICN node according to some example embodiments of the present disclosure;
FIG. 8 is a simplified block diagram of a device that is suitable for implementing example embodiments of the present disclosure; and
Fig. 9 illustrates a block diagram of an example computer readable medium in accordance with some embodiments of the present disclosure.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the "network" may refer to as Information Centric Network (ICN), User-Centric Content Delivery Network (UC-CDN), Content Centric Network (CCN) and Named Data Network (NDN) etc. which are in contrast to IP-based, host-oriented, Internet architecture. Such networks emphasize content by making it directly addressable and routable. Endpoints communicate based on named data instead of IP addresses.

As used herein, the term "network node" refers to a node in a network via which a terminal device accesses the network and receives services therefrom. The network node may also refer to a network device, an access network node, a base station (BS), or an access point (AP), a Remote Radio Unit (RRU), a radio header (RH), a remote radio head (RRH), a relay, a low power node such as a femto, a pico, and so forth, depending on the applied terminology and technology.

As used herein, the term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

As used herein, the term "controller" refers to control node of Software Defined Network (SDN), which is used to perform cloud computing that facilitates network management and enables programmatically efficient network configuration in order to improve network performance and monitoring. It should be understood that any other control device, which may provide a centralized network management could be used in the embodiment of the present disclosure.

As mentioned above, the ICN is a new raised novel network paradigm. The ICN may shift the network communication from a host centric approach to an information centric approach, which could better adapts to disseminate the rapidly increased multi-media content.

In the frame of ICN, the NDN is the most notable architecture in ICN, which is used to disseminate the content by means of the named object, name-based routing and in-network cache with the benefit to natively and efficiently support any-cast, multicast, mobility, content security and minimized latency and bandwidth consumption etc.

Regarding the routing for the data flow in ICN, besides the distributed routing scheme e.g. OSPF based routing protocol for Named Data Networking (OSPGN), Intermediate System-to-Intermediate System (IS-IS) etc., SDN centralized routing can be adopted in ICN. The integration of SDN and ICN can be considered as software defined ICN. The SDN may separate the control plane from the data plane and simplify the ICN forwarding node implementation. Meanwhile, with the comprehensive topology view of the nodes and the named objects in the network, the centralized SDN controller can easily calculate the routing information and populate the route to the FIB of the underlying ICN nodes via *OpenFlow* flexibly.

Besides the named content, ICN can also be used to address the named function in the network, and even to request and retrieve the function code from another ICN nodes to the local ICN node and execute the function. This drastically evolves the ICN from content dissemination to function addressing and placement. In addition to the data flow forwarding, the ICN node is extended to be the function execution platform with the right computation power, storage and virtualization capability etc.

Moreover, the Network Function Virtualization (NFV) and micro-service make the ICN node, i.e. function execution platform easier to dynamically and flexibly deploy network functions. NFV allows for functions to be virtualized and therefore be present in greater number and positioned on-demand. The network service providers are increasingly adopting NFV and micro service to provide network resident functionality, not only for reducing CAPEX but also for offering more flexibility to customers who would like customized processing of their packets.

In general, before the packets of the data flow are delivered to the destination, some additional processing may be performed for them. These functions for processing the data flow are provided for policy control, security and performance optimization, for example, the modification of the packet header (e.g. NAT, proxy), discard packets (e.g. firewall), collection of statistical information (e.g., Deep Packet Inspection (DPI)) or even the modification of the payload (e.g., optimization and compression) etc. These functions reside in the network and the packets to be processed are steered through the sequence of these functions to provide the e2e service. The action of steering packets through these functions is defined as service chaining.

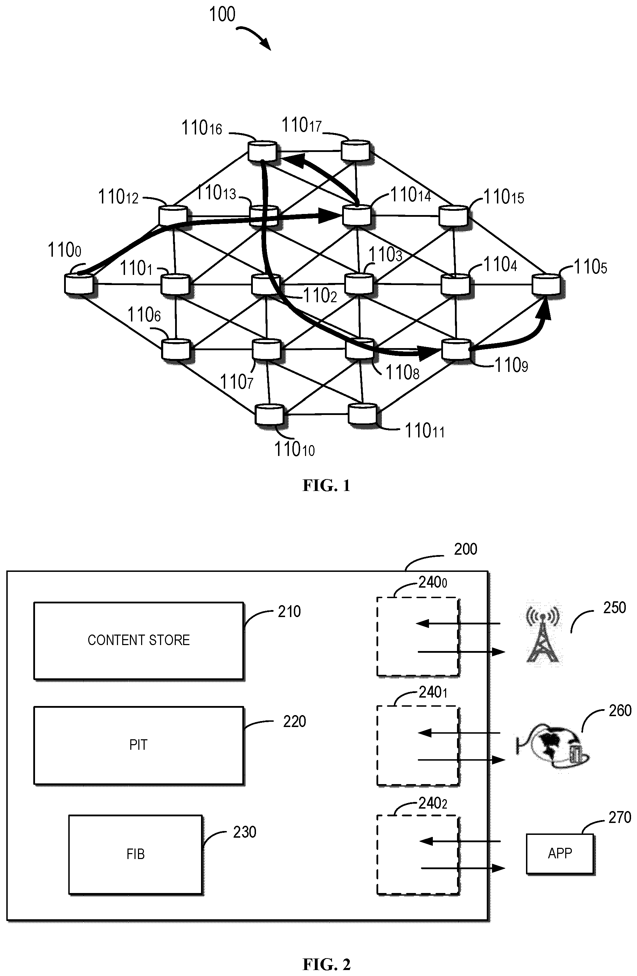

FIG. 1 shows a conventional network 100. The network 100 herein may be, for example, an ICN. As shown in FIG. 1, the network 100 comprises ICN node 110₀-110₁₇. These ICN nodes 110₀-110₁₇ may communicate with each other. As mentioned above, the ICN nodes 110₀-110₁₇ may disseminate the content by means of the named object, name-based routing and in-network cache. That is to say, each of the ICN nodes 110₀-110₁₇ may comprise different functions to provide the corresponding services.

As an example, in the network shown in FIG. 1, the node 110₀ and node 110₅ may be considered as the ingress and the egress of the network 100, respectively. It should be understood that any other nodes in the network 100 may be designated as the ingress and the egress of the network 100. The packets of a data flow may enter into the network 100 from the ingress and deliver to other exterior devices, for example, terminal devices, from the egress of the network 100.

As described above, before the packets of the data flow is delivered to the destination, some additional processing may be performed based on the network policy of control, security and performance optimization. As an example, a data flow enters the network 100 from the node 110₀ and may be performed some processing based on a service chain of functions NAT, DPI and firewall.

As shown in FIG.1, besides the node 110₀ and node 110₅, which are designated as the ingress and the egress of the network 100, respectively, other ICN nodes with function residing and processing are defined as service node. In the ingress node 110₀, the packets of the data flow are routed first to the node 110₁₄ for the security check, if the access is validated, the packets are delivered to node 110₁₆ for DPI actions, after the statistic, the packets are further forwarded to node 110₉ to perform address translation NAT, and then finally are sent to the egress node110₅. In the process, following the service chain, the packets accordingly are routed to the chained service nodes to perform the corresponding functions.

In the process shown in FIG. 1, it can be seen that ICN node may route the packet of the data flow to next ICN, on which the corresponding function may be performed for the packet of the data flow, because there is a Forwarding Information Base within each ICN nodes of the network 100. FIG.2 shows a conventional forwarding engine for the network node in the network of FIG. 1.

As shown in FIG. 2, a forwarding engine 200 may comprise a content store 210, a Pending Interest Table (PIT) 220, a FIB 230 and some faces 240₀-240₂. As used herein, the term "face" may be referred to as interface, from which the request may be led to the 'interest' content in the network, for example, a base station 250, the internet 260 or an application 270.

As an example, the client sends the 'interest' packet to request the named content in the network. In each node of the ICN, the FIB may refer to as a forwarding table comprising a list of content name and the corresponding face (i.e. interface), at which the unique content name is used to look up the next hop - 'face', which finally hop by hop leads the request to find the content in the network.

The content store caches the local replica of the requested content when the content will be delivered back from the server to the client through the inverse path of the request. The local cache of the content will satisfy the future request, for example, from a further client, to this content. With the name based routing and in-network cache, the routing and delivery of the data flow may be simplified in traditional IP network and ICN network.

Even if the name based routing and in-network cache may provide a rapid content dissemination, for some time critical service, for example, interactive games, VR/AR, IoT time critical data collection and real time security analytic etc., the efficiency and the flexibility of the data routing may be still not sufficient.

In traditional host based IP network, the IP addresses of the nodes which the service chain functions reside are need to be located first, to establish the node to node connections. These IP addresses are configured into the destination address of the packet head in the ingress and the chained service nodes. Through the service chain, the packets are routed sequentially to next service nodes and finally to the destination egress node. The process is clear, but the issue is also obvious. That is, the location of the service nodes in the service chain should be pre-configured. Meanwhile, as shown in FIG.1, to chaining the nodes, the path of the data flow is deviated from the shortest path between the ingress and egress of the network. In some case, it may even require inverse path forwarding to track the service chain, for example from node 110₁₄ to node 110₁₆ in the routing.

As mentioned above, in the software defined ICN, the functions in the service chain is addressed directly by their unique name, instead of the IP address. The packets of the data flow are contained in the 'interest' packet in the NDN scheme and are routed to the functions for processing via the named based routing. It is proposed to route the data flow to the functions of the service chain by means of the SDN controller centrally.

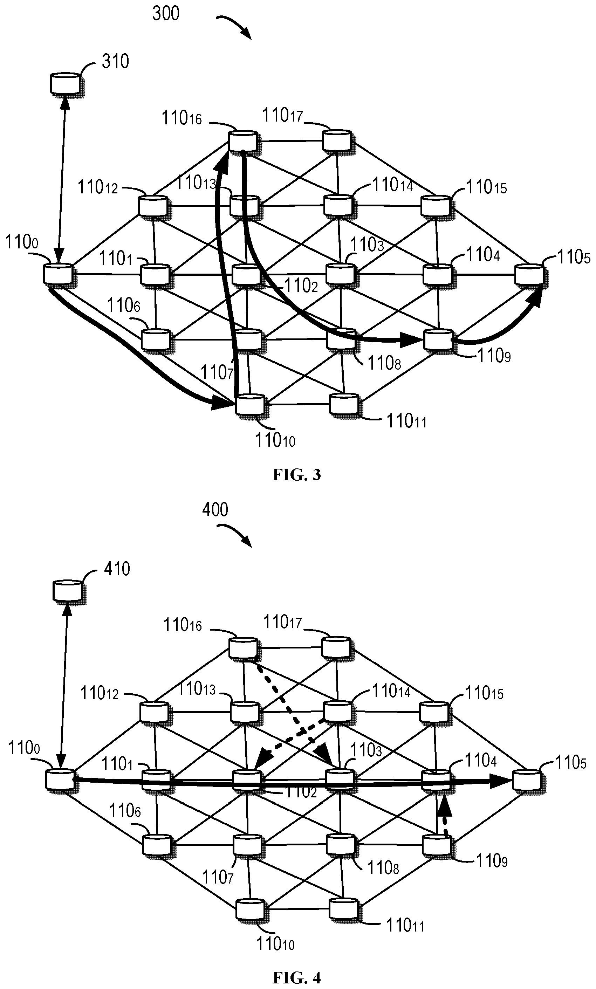

FIG. 3 shows a conventional network 300 with the SDN controller. As shown in FIG. 3, when the packets of the data flow enter the ingress node 110₀, the packets could be classified as flows via the tuple match of the packet head. If the packet is the first packet of the data flow, i.e. no hit in the FIB, the packets may be forwarded to the SDN controller which identifies the flow and assigns the corresponding service chain by the service chain management module.

With the identified named functions of the chain as input, based on the global view of the functions in the network, the routing module will calculate a sequence of routes to chaining the functions. As shown in FIG. 3, the route of the service chain is ingress node 110₀/node 110₁₀/node 110₁₆/node 110₉/egress node 110₅. Apparently, as the name based routing is location agnostic, the instance of firewall in node 110₁₀ is selected as the ingress node 110₀'s next hop due to the shorter route comparing with the firewall instance in node 110₁₄, as shown in FIG. 1.

Then, the forwarding rules will be incorporated in the FIB of the underlying ingress and ICN nodes in the route through *OpenFlow.* In order to implement the service chaining in ICN, only the FIB is used while the NDN content store and the PIT are not key.

After the forwarding rules have been set, the ingress node transforms the first and the subsequent packets of the flow to the 'interest' packets, and carries the chained functions name obtained from the SDN controller in the packet head. The name in ingress node is formed as firewall/DPIINAT. As described in NDN scheme, the chained functions' name is used to look up the next hop in FIB by longest-prefix matching. When these packets arrive to the service node and are processed by the function of the node, the corresponding function name will be popped from the chained names. In node 110₁₀, after the firewall check, the name in the packet head is changed to DPI/NAT which will lead the FIB looking up to the next hop to DPI.

Comparing with the function's location dependent routing solution in host based IP network, the location agnostic name-based routing in software defined ICN creates more flexibility for function addressing in virtualization environment, better scalability for functions scaling due the share of multiple functions, higher reliability to cope with the potential function failure etc.

However, both of the two solutions, as shown in FIG.1 and FIG. 3 respectively, are not optimized on the routing path, which lead to the routing path is deviated far from the shortest path between the ingress and egress, which results in the waste of network bandwidth and the energy non-efficient extra data movement. More importantly, this may increase the service chain latency, which may lead the service failure to the time critical services. For example, in FIGs. 1 and 3, the hops for completing the service chain are 9 and 11 respectively, while the shortest path (ingress node 110₀/node 110₁/node 110₂/node 110₃/ node 110₄/egress node 110₅) is only 5 hops.

In order to overcome the latency problem of the time sensitive services, with ICN and SDN, the present disclosure develops a routing scheme of SDN controller to lead the packets along the shortest path between the ingress and egress, develops a new FIB forwarding scheme in ICN service node to automatically instance the functions of the service chain into the shortest path. With this dynamic method and no manual intervention required, the service chain is organized along the shortest path which minimizes the service chain latency in the packet processing.

FIG. 4 shows an example network 400 in which example embodiments of the present disclosure can be implemented. Similar with FIG.1, the network 400 may comprise a plurality of ICN node 110₀-110₁₇. These ICN nodes 110₀-110₁₇ may communicate with each other. Furthermore, the node 110₀ and node 110₅ may be considered as the ingress and the egress of the network 100, respectively. Also similar with FIG. 3, the network 400 may further comprise a SDN controller 410, which may similar or same as the SDN controller 310 as shown in FIG.3 in the structure, but different in function.

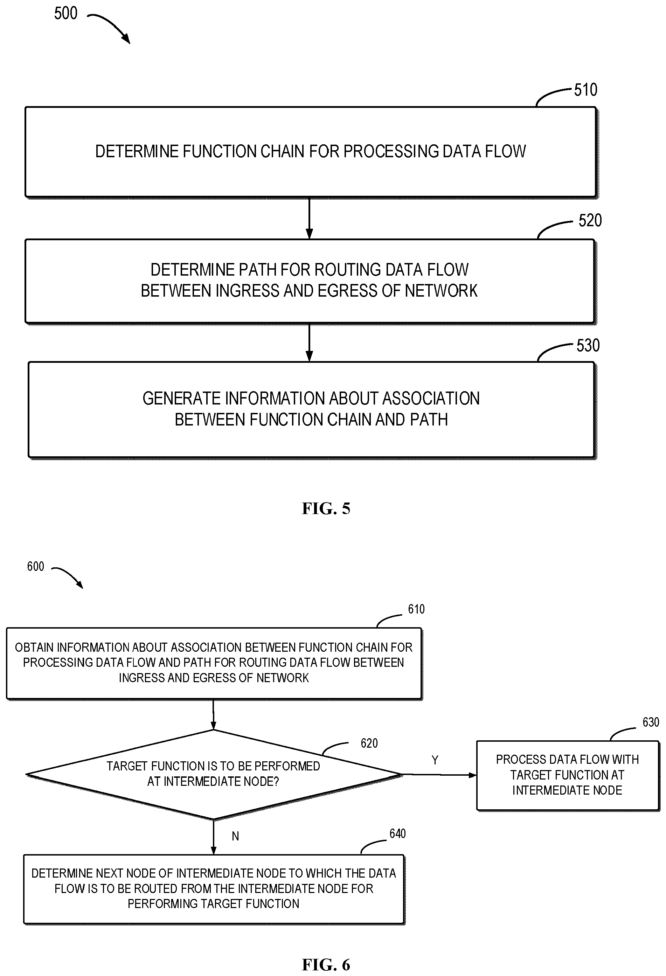

Principle and implementations of the present disclosure will be described below in detail with reference to FIGs. 5-6. FIG. 5 shows a flowchart of an example method 500 for data flow processing according to some example embodiments of the present disclosure. FIG. 6 shows a flowchart of an example method 600 for data flow processing according to some example embodiments of the present disclosure. For the purpose of discussion, the methods 500 and 600 will be described with reference to FIG. 4. The method 500 can be implemented at the SDN controller 410 as shown in FIG. 4. The method 600 can be implemented at an intermediate node in the routing path (for example, node 110₁) as shown in FIG. 4.

As shown in FIG. 5, at 510, the SDN controller 410 determines a service chain for processing a data flow. The service chain comprises a target function to be performed for the data flow in a network.

In some embodiment, the SDN controller 410 may obtain the type of the data flow and determine a network policy corresponding to the type of the data flow, for example, the security policy. Based on the network policy, the SDN controller 410 may further determine the target function.

At 520, the SDN controller 410 determines a path for routing the data flow between an ingress node 110₀ and an egress node 110₅ of the network 400. The path may indicate an intermediate node of the network for performing the target function. For example, the intermediate node may be referred to any of the nodes 110₁, node 110₂, node 110₃ and node 110₄.

In some embodiment, the SDN controller 410 may determine a length of a candidate path an ingress node 110₀ and an egress node 110₅ of the network 400 and determine whether the length of the candidate path is less than a length threshold. In other words, the SDN controller 410 determines whether the candidate path is the shortest path between the ingress node 110₀ and the egress node 110₅ of the network 400. If the SDN controller 410 determines the candidate path is the shortest path, the SDN controller 410 may determine the candidate path as the path for routing the data flow. For example, as shown in FIG. 4, the shortest path should be ingress node 110₀/node 110₁/node 110₂/node 110₃/ node 110₄/egress node 110₅.

In order to process the packets in the shortest path, leveraging the network virtualization, the functions of the service chain will be instanced into the path in the sequence of the service chain. The routing module in SDN controller 410, again with the comprehensive view of the functions in the network, calculates and selects the optimal nodes in the shortest path to place the functions. The nodes selected shall be optimized to take into account all of the service chain functions as a whole, i.e. the total cost e.g. the total hops to retrieve and replicate all of these functions from the existing functions into the shortest path is minimized.

Thus, at 530, the SDN controller 410 generates information about an association between the service chain and the path. As used herein, the information may be referred to as the entries of the FIB.

In some embodiment, the SDN controller 410 may determine a next node of the intermediate node to which the data flow is to be routed from the intermediate node and may generate information indicating that the data flow is to be processed with the target function at the intermediate node and the processed data flow is to be routed to the next node.

As different flows can be processed by the same chained service in the network, the flows may not be differentiated only by the chained functions name. Consequently, the shortest route of the flow may not be differentiated, either. In some embodiments, it is proposed to add the term "flow ID", i.e. a unique identifier of the flow, to the FIB to joint with the chained function name for next hop looking up. An example of FIB is shown in table 1 as follow.

**Table 1: an example of FIB**

| Flow ID | Chained Functions Name | Next Hop |
|---|---|---|
| Flow X | /Firewall/DPI/NAT | Face 0 |
| Flow X | /DPI/NAT | Face 1 |
| Flow X | /NAT | Face 2 |
| ... | ... | ... |

This requires the ingress node keeps the flow ID of the original packet in the 'interest' packet when performing the packet transforming. Further, the SDN controller 410 needs to populate this flow ID in the routing information when set the forwarding rule to the FIB of the ICN nodes.

In some embodiments, the SDN controller 410 may transmit the information about the association to the ingress node 110₀ of the network 400.

Referring to FIG. 6, once the ingress node 110₀ of the network 400 receives the updated FIB information, at 610, if the intermediate node (for example the intermediate node 110₁) receives the data flow, for example, the first packet of the data flow, the intermediate node 110₁ obtains the information about an association between the service chain for processing the data flow and a path for routing the data flow between the ingress node 110₀ and the egress node 110₅ of the network 400. That is, the intermediate node 110₁ may obtain the information and add the information to its own FIB.

At 620, the intermediate node 110₁ determining whether the target function is to be performed at the intermediate node 110₁ based on the information about the association. If the intermediate node 110₁ determines that the target function is to be performed at the intermediate node 110₁, at 630, the intermediate node 110₁ processes the data flow with the target function at the intermediate node. If the intermediate node 110₁ determines that the target function is not to be performed at the intermediate node 110₁, at 640, the intermediate node 110₁ may determine a next node of the intermediate node (for example the intermediate node 110₂) to which the data flow is to be routed from the intermediate node 110₁, at which the target function is to be performed for the data flow.

In some embodiments, the intermediate node 110₁ may determine whether the target function exists at the intermediate node and if the intermediate node 110₁ determines the target function does not exist at the intermediate node, the intermediate node 110₁ may obtain the target function from a further intermediate node accessible to the intermediate node.

In some embodiments, the intermediate node 110₁ may determine a candidate node comprising the target function. The candidate node may be an intermediate node of the network. The intermediate node 110₁ may further obtain the target function from the candidate node, if the intermediate node 110₁ determines a distance between the candidate node and the intermediate node 110₁ is less than a threshold distance. The intermediate node 110₁ may further activate the target function at the intermediate node.

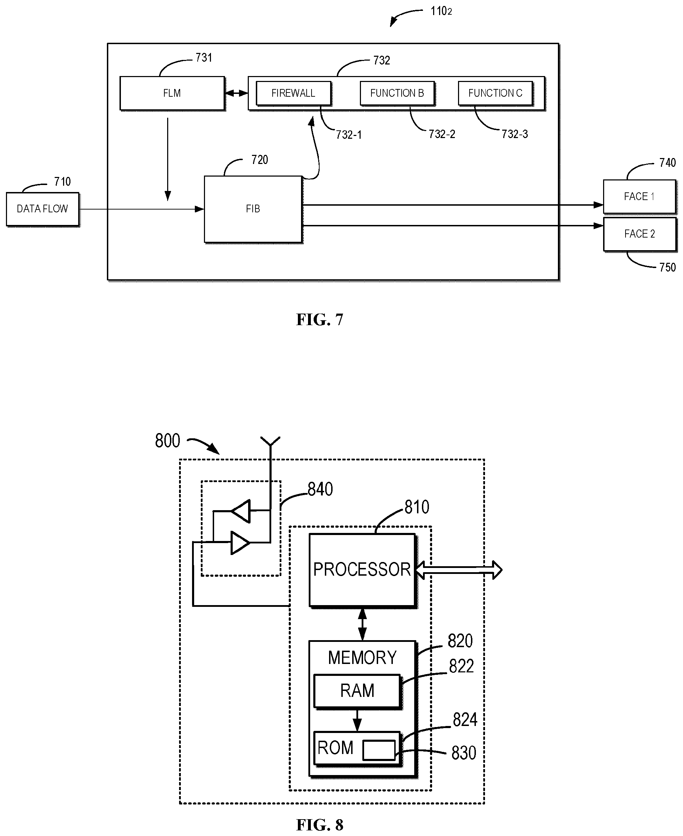

FIG. 7 shows a diagram of an example process for data flow processing in an intermediate node 110₂ according to some example embodiments of the present disclosure. The intermediate node shown in FIG. 7 may be also referred to as any of the node 110₁, 110₃ and 110₄, as shown in FIG. 4 According the method 600 described above, the intermediate node 110₂ may receive the data flow 710. The intermediate node 110₂ may identify the flow ID of the data flow 710 and look up the entry associated with the data flow 710 in FIB 720. The forwarding table stored in the FIB 720 may be same as the Table 1 as above. Thus, by mean of the look up, the intermediate node 110₂ obtains the information as, for example "data flow 720, /Firewall/DPI/NAT, Face 0." The field "Face 0" indicates the node at which the function "Firewall" is to be performed. If the "Face 0" is directed to the intermediate node 110₂, then the function "Firewall" is to be performed at the intermediate node 110₂.

In ICN service node, to perform the function retrieval, activation, execution and even deletion etc. management activity, the intermediate node 110₂ may further comprises a local module "Function Lifecycle Management" (FLM) 731, which manages the function module 732 included in the intermediate node 110₂. Further, the intermediate node 110₂ may determine whether the function "Firewall" 732-1 is implemented in the the ICN node 110₂. If the intermediate node 110₂ comprises the function "Firewall", then the function "Firewall" is performed for the data flow 710. If the intermediate node 110₂ does not comprise the function "Firewall", the intermediate node 110₂ may obtain the function from other intermediate node (for example, the intermediate node 110₁₄) which comprises the function "Firewall", for example, by means of copying the function code from the intermediate node 110₁₄.

The function "Firewall" may be activated in the intermediate node 110₂ and the data flow 710 may be processed accordingly. Then, the intermediate node 110₂ may look up the FIB 720 and obtain the information about the next function in the service chain and the next node at which the next function is to be performed. For example, the information shows "data flow 720, /DPI/NAT, Face 1" which indicates the next function for the data flow 720 is DPI which is to be performed at face 1. For example, the face 1 may be directed to the intermediate node 110₃, as shown in FIG. 4, and then the data flow 720 may be routed in the intermediate node 110₃.

Back to FIG. 6, in some embodiments, the intermediate node 110₂ may determine, based on the information of the association, the next node 110₃ of the intermediate node to which the data flow is to be routed from the intermediate node 110₂ and routing the processed data flow to the next node 110₃. At the intermediate node 110₃, similar process as described above with reference to FIG. 7 may be performed. For example, the function "DPI" may be performed at the intermediate node 110₃. As can be seen from FIG.4, the intermediate node 110₃ may obtain the corresponding function from another intermediate node 110₁₆.

In addition to the data transportation to the function for processing, the dynamic function placement to the data will give the network more flexibility to optimize its e2e performance for service offering. In service chaining, the present disclosure takes both the data transportation optimization and the function placement flexibility to improve the chaining performance.

In the new service chaining scheme, the service latency can be minimized which is critical to the time sensitive services such as the interactive games, VR/AR, IoT time critical data collection, real time security analytic etc. Meanwhile, as the data flow traverses the network along the most economic shortest route, it drastically saves the network bandwidth and reduces the data movement in the network.

The present disclosure is based on the advances of both ICN and SDN technology, together with the support of NFV and micro-service. In SDN, the centralized routing calculation, comparing with the distributed routing scheme, provides a more efficient way to produce both the optimal route and the optimal function placement. While in ICN, the forwarding scheme to automatically retrieve the function will enhance the service reliability for the potential function failure, and the function name based routing with location agnostic will enable the better adaptation to the possible dynamic change of the service chain.

In some example embodiments, an apparatus capable of performing the method 500 (for example, implemented at the SDN controller 410) may comprise means for performing the respective steps of the method 500. The means may be implemented in any suitable form. For example, the means may be implemented in a circuitry or software module.

In some example embodiments, the apparatus comprises: means for determining, at a controller, a service chain for processing a data flow, the service chain comprising a target function to be performed for the data flow in a network; means for determining a path for routing the data flow between an ingress and an egress of the network, the path indicating an intermediate node of the network for performing the target function; and means for generating information about an association between the service chain and the path.

In some example embodiments, the means for determining the service chain may comprise means for obtaining a type of the data flow; means for determining a network policy corresponding to the type of the data flow; and means for determining the target function based on the network policy.

In some example embodiments, the means for determining the path for routing the data flow may comprise means for determining a length of a candidate path between the ingress and the egress of the network; means for determining whether the length of the candidate path is less than a length threshold; and means for in response to the length of the candidate path is less than the length threshold, determining the candidate path as the path for routing the data flow.

In some example embodiments, the means for generating the information about the association may comprise means for determining a next node of the intermediate node to which the data flow is to be routed from the intermediate node; and generating information indicating that the data flow is to be processed with the target function at the intermediate node and the processed data flow is to be routed to the next node.

In some example embodiments, the apparatus may further comprise means for transmitting the information about the association to the ingress of the network.

In some example embodiments, an apparatus capable of performing the method 600 (for example, implemented at the intermediate node 110₂) may comprise means for performing the respective steps of the method 600. The means may be implemented in any suitable form. For example, the means may be implemented in a circuitry or software module.

In some example embodiments, the apparatus comprises: means for in response to receiving a data flow at an intermediate node in a network, obtaining information about an association between a service chain for processing the data flow and a path for routing the data flow between an ingress and an egress of the network, the service chain comprising a target function to be performed for the data flow in the network, the path indicating an intermediate node of the network for performing the target function; means for determining whether the target function is to be performed at the intermediate node based on the information about the association; and means for in response to determining that the target function is to be performed at the intermediate node, processing the data flow with the target function at the intermediate node.

In some example embodiments, the means for performing the target function for the data flow at the intermediate node may comprise means for determining whether the target function exists at the intermediate node; and means for in response to determining the target function does not exist at the intermediate node, obtaining the target function from a further intermediate node accessible to the intermediate node.

In some example embodiments, the means for obtaining the target function from the further intermediate node may comprise means for determining a candidate node comprising the target function, the candidate node being an intermediate node of the network; means for in responding to a distance between the candidate node and the intermediate node is less than a threshold distance, obtaining the target function from the candidate node; and means for activating the target function at the intermediate node.

In some example embodiments, the apparatus may further comprise means for determining, based on the information of the association, a next node of the intermediate node to which the data flow is to be routed from the intermediate node; and routing the processed data flow to the next node.

Fig. 8 is a simplified block diagram of a device 800 that is suitable for implementing embodiments of the present disclosure. The device 800 may be provided to implement the network node, for example the SDN controller 410 and the intermediate node as shown in Fig. 4. As shown, the device 800 includes one or more processors 810, one or more memories 820 coupled to the processor 810, and one or more transmitters and/or receivers (TX/RX) 840 coupled to the processor 810.

The TX/RX 840 is for bidirectional communications. The TX/RX 840 has at least one antenna to facilitate communication. The communication interface may represent any interface that is necessary for communication with other network elements.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The program 830 may be stored in the ROM 824. The processor 810 may perform any suitable actions and processing by loading the program 830 into the RAM 822.

The embodiments of the present disclosure may be implemented by means of the program 830 so that the device 800 may perform any process of the disclosure as discussed with reference to Figs. 4 to 7. The embodiments of the present disclosure may also be implemented by hardware or by a combination of software and hardware.

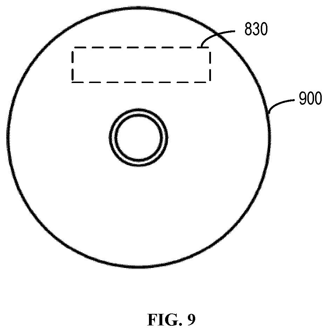

In some embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. The computer readable medium may include any types of tangible non-volatile storage, such as ROM, EPROM, a flash memory, a hard disk, CD, DVD, and the like. Fig. 9 shows an example of the computer readable medium 900 in form of CD or DVD. The computer readable medium has the program 830 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. For example, in some embodiments, various examples of the present disclosure (e.g., a method, apparatus or device) may be partly or fully implemented on the computer readable medium. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The units included in the apparatuses and/or devices of the present disclosure may be implemented in various manners, including software, hardware, firmware, or any combination thereof. In one embodiment, one or more units may be implemented using software and/or firmware, for example, machine-executable instructions stored on the storage medium. In addition to or instead of machine-executable instructions, parts or all of the units in the apparatuses and/or devices may be implemented, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

As examples, embodiments of the present disclosure may be described in the context of the computer-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, a computer readable medium may be any tangible medium that may contain, or store a program for use by or in connection with an instruction execution system, apparatus, or device. The computer readable medium may be a machine readable signal medium or a machine readable storage medium. The computer readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain cases, multitasking and parallel processing may be advantageous. Likewise, while several specific embodiment details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it would be appreciated that the present disclosure defined in the appended claims is not necessarily limited to the specific features or acts described above. Rather, the specific features and acts described above are disclosed as example forms of implementing the claims.

## Claims

1. A method (500), comprising:
determining (510), at a controller, a service chain for processing a data flow, the service chain comprising a target function to be performed for the data flow in a network;
determining (520), at the controller, a path for routing the data flow between an ingress node (110₀) and an egress node (110₅) of the network, the path indicating an intermediate node of the network for performing the target function; and
generating (530), at the controller, information about an association between the service chain and the path, and transmitting the information about the association to the intermediate node, wherein determining (520) the path for routing the data flow comprises:
determining a length of a candidate path between the ingress node and the egress node of the network;
determining whether the length of the candidate path is less than a length threshold; and
in response to the length of the candidate path being less than the length threshold, determining the candidate path as the path for routing the data flow.

2. The method (500) of Claim 1, wherein determining the service chain comprises:
obtaining a type of the data flow;
determining a network policy corresponding to the type of the data flow; and
determining the target function based on the network policy.

3. The method (500) of Claim 1, wherein generating the information about the association comprises:
determining a next node of the intermediate node to which the data flow is to be routed from the intermediate node; and
generating information indicating that the data flow is to be processed with the target function at the intermediate node and the processed data flow is to be routed to the next node.

4. The method (500) of Claim 1, further comprising:
transmitting the information about the association to the ingress of the network.

5. A method (600), comprising:
in response to receiving a data flow at an intermediate node in a network, obtaining (610), at the intermediate node, information from a controller about an association between a service chain for processing the data flow and a path for routing the data flow between an ingress node (110₀) and an egress node (110₅) of the network, the service chain comprising a target function to be performed for the data flow in the network, the path indicating an intermediate node of the network for performing the target function;
determining (620), at the intermediate node, whether the target function is to be performed at the intermediate node based on the information about the association; and
in response to determining that the target function is to be performed at the intermediate node, processing (630), at the intermediate node, the data flow with the target function at the intermediate node
, wherein performing the target function for the data flow at the intermediate node comprises:
determining whether the target function exists at the intermediate node; and
in response to determining the target function does not exist at the intermediate node, obtaining the target function from a further intermediate node accessible to the intermediate node.

6. The method (600) of Claim 5, wherein obtaining the target function from the further intermediate node comprises:
determining a candidate node comprising the target function, the candidate node being an intermediate node of the network;
in responding to a distance between the candidate node and the intermediate node is less than a threshold distance, obtaining the target function from the candidate node; and
activating the target function at the intermediate node.

7. The method (600) of Claim 5, further comprising:
determining (640), based on the information of the association, a next node of the intermediate node to which the data flow is to be routed from the intermediate node; and
routing the processed data flow to the next node.

8. An apparatus for processing a data flow, comprising:
means for determining (510), at a controller, a service chain for processing a data flow, the service chain comprising a target function to be performed for the data flow in a network;
means for determining (520) a path for routing the data flow between an ingress node (110₀) and an egress node (110₅) of the network, the path indicating an intermediate node of the network for performing the target function;
means for generating (530) information about an association between the service chain and the path; and means for transmitting the information about the association to the intermediate node, wherein the determining (520) of the path for routing the data flow comprises:
determining a length of a candidate path between the ingress node and the egress node of the network;
determining whether the length of the candidate path is less than a length threshold; and
in response to the length of the candidate path being less than the length threshold, determining the candidate path as the path for routing the data flow.

9. A device (800), comprising the
the egress node of the network;
generate the information about the association; and transmit the information about the association to the ingress node (110₀).

10. The device (800) of Claim 9, wherein the device (800) is caused to determine the service chain by:
obtaining a type of the data flow;
determining a network policy corresponding to the type of the data flow; and
determining the target function based on the network policy.

11. The device (800) of Claim 9, wherein the device (800) is caused to generate the information about the association by:
determining a next node of the intermediate node to which the data flow is to be routed from the intermediate node; and
generating information indicating that the data flow is to be processed with the target function at the intermediate node and the processed data flow is to be routed to the next node.

12. The device (800) of Claim 9, wherein the device (800) is further caused to:
transmit the information about the association to the ingress of the network.

13. An apparatus for processing a data flow, comprising:
means for in response to receiving a data flow at an intermediate node in a network, obtaining information from a controller about an association between a service chain for processing the data flow and a path for routing the data flow between an ingress node and an egress node of the network, the service chain comprising a target function to be performed for the data flow in the network, the path indicating an intermediate node of the network for performing the target function;
means for determining whether the target function is to be performed at the intermediate node based on the information about the association; and
means for in response to determining that the target function is to be performed at the intermediate node, processing the data flow with the target function at the intermediate node, wherein performing the target function for the data flow at the intermediate node comprises:
determining whether the target function exists at the intermediate node; and
in response to determining the target function does not exist at the intermediate node, obtaining the target function from a further intermediate node accessible to the intermediate node.

14. A device (800), comprising the apparatus according to claim 13, wherein the device comprises:
at least one processor (810); and
at least one memory (820) including computer program codes;
the at least one memory and the computer program codes are configured to, with the at least one processor, cause the apparatus at least to:
in response to receiving the data flow at the intermediate node in the network, obtain the information about the association;
determine whether the target function is to be performed at the intermediate node based on the information about the association; and
in response to determining that the target function is to be performed at the intermediate node, process the data flow with the target function at the intermediate node.

15. The device (800) of Claim 14, wherein the device is caused to obtain the target function from the further intermediate node by:
determining a candidate node comprising the target function, the candidate node being an intermediate node of the network;
in responding to a distance between the candidate node and the intermediate node is less than a threshold distance, obtaining the target function from the candidate node; and
activating the target function at the intermediate node.

16. The device (800) of Claim 15, wherein the device is further caused to:
determine, based on the information of the association, a next node of the intermediate node to which the data flow is to be routed from the intermediate node; and
route the processed data flow to the next node.

17. A non-transitory computer readable medium (900) comprising program instructions (830) for causing an apparatus to perform at least the method of any of claims 1-4.

18. A non-transitory computer readable medium (900) comprising program instructions (830) for causing an apparatus to perform at least the method of any of claims 5-7.

## Patentansprüche

1. Verfahren (500), umfassend:
Bestimmen (510), an einem Controller, einer Dienstkette für die Verarbeitung eines Datenflusses, wobei die Dienstkette eine Zielfunktion umfasst, die für den Datenfluss in einem Netzwerk auszuführen ist;
Bestimmen (520), an dem Controller, eines Pfades für die Weiterleitung des Datenflusses zwischen einem Eingangsknoten (110₀) und einem Ausgangsknoten (110₅) des Netzwerks, wobei der Pfad einen Zwischenknoten des Netzwerks zur Ausführung der Zielfunktion angibt; und
Erzeugen (530), an dem Controller, von Informationen über eine Zuordnung zwischen der Dienstkette und dem Pfad, und Übermitteln der Informationen über die Zuordnung an den Zwischenknoten,
wobei das Bestimmen (520) des Pfades für die Weiterleitung des Datenflusses umfasst:
Bestimmen einer Länge eines Kandidatenpfades zwischen dem Eingangsknoten und dem Ausgangsknoten des Netzwerks;
Bestimmen, ob die Länge des Kandidatenpfades kleiner als ein Längenschwellenwert ist; und
als Reaktion darauf, dass die Länge des Kandidatenpfades kleiner als der Längenschwellenwert ist, Bestimmen des Kandidatenpfades als den Pfad für die Weiterleitung des Datenflusses.

2. Verfahren (500) nach Anspruch 1, wobei das Bestimmen der Dienstkette umfasst:
Ermitteln eines Typs des Datenflusses;
Bestimmen einer Netzwerkrichtlinie entsprechend dem Typ des Datenflusses; und
Bestimmen der Zielfunktion auf der Grundlage der Netzwerkrichtlinie.

3. Verfahren (500) nach Anspruch 1, wobei das Erzeugen der Informationen über die Zuordnung umfasst:
Bestimmen eines nächsten Knotens des Zwischenknotens, an den der Datenfluss vom Zwischenknoten weitergeleitet werden soll; und
Erzeugen von Informationen, die angeben, dass der Datenfluss mit der Zielfunktion am Zwischenknoten verarbeitet werden soll und dass der verarbeitete Datenfluss an den nächsten Knoten weitergeleitet werden soll.

4. Verfahren (500) nach Anspruch 1, ferner umfassend:
Übermitteln der Informationen über die Zuordnung an den Eingang des Netzwerks.

5. Verfahren (600), umfassend:
als Reaktion auf den Empfang eines Datenflusses an einem Zwischenknoten in einem Netzwerk, Erlangen (610), an dem Zwischenknoten, von Informationen von einem Controller über eine Zuordnung zwischen einer Dienstkette zur Verarbeitung des Datenflusses und einem Pfad für die Weiterleitung des Datenflusses zwischen einem Eingangsknoten (110₀) und einem Ausgangsknoten (110₅) des Netzwerks, wobei die Dienstkette eine Zielfunktion umfasst, die für den Datenfluss im Netzwerk auszuführen ist, wobei der Pfad einen Zwischenknoten des Netzwerks zur Ausführung der Zielfunktion angibt;
Bestimmen (620), an dem Zwischenknoten, ob die Zielfunktion am Zwischenknoten auf der Grundlage der Informationen über die Zuordnung auszuführen ist; und
als Reaktion auf die Bestimmung, dass die Zielfunktion am Zwischenknoten auszuführen ist, Verarbeiten (630), an dem Zwischenknoten, des Datenflusses mit der Zielfunktion am Zwischenknoten
, wobei das Ausführen der Zielfunktion für den Datenfluss am Zwischenknoten umfasst:
Bestimmen, ob die Zielfunktion am Zwischenknoten vorhanden ist; und
als Reaktion auf die Bestimmung, dass die Zielfunktion am Zwischenknoten nicht vorhanden ist, Erlangen der Zielfunktion von einem weiteren Zwischenknoten, der für den Zwischenknoten zugänglich ist.

6. Verfahren (600) nach Anspruch 5, wobei das Erlangen der Zielfunktion von dem weiteren Zwischenknoten umfasst:
Bestimmen eines Kandidatenknotens, der die Zielfunktion umfasst, wobei der Kandidatenknoten ein Zwischenknoten des Netzwerks ist;
als Reaktion darauf, dass ein Abstand zwischen dem Kandidatenknoten und dem Zwischenknoten kleiner als ein Schwellenabstand ist, Erlangen der Zielfunktion vom Kandidatenknoten; und
Aktivieren der Zielfunktion am Zwischenknoten.

7. Verfahren (600) nach Anspruch 5, ferner umfassend:
Bestimmen (640), auf der Grundlage der Informationen der Zuordnung, eines nächsten Knotens des Zwischenknotens, an den der Datenfluss vom Zwischenknoten weitergeleitet werden soll; und
Weiterleiten des verarbeiteten Datenflusses an den nächsten Knoten.

8. Vorrichtung zur Verarbeitung eines Datenflusses, umfassend:
Mittel zum Bestimmen (510), an einem Controller, einer Dienstkette für die Verarbeitung eines Datenflusses, wobei die Dienstkette eine Zielfunktion umfasst, die für den Datenfluss in einem Netzwerk auszuführen ist;
Mittel zum Bestimmen (520) eines Pfades für die Weiterleitung des Datenflusses zwischen einem Eingangsknoten (110₀) und einem Ausgangsknoten (110₅) des Netzwerks, wobei der Pfad einen Zwischenknoten des Netzwerks zur Ausführung der Zielfunktion angibt;
Mittel zum Erzeugen (530) von Informationen über eine Zuordnung zwischen der Dienstkette und dem Pfad; und Mittel zum Übermitteln der Informationen über die Zuordnung an den Zwischenknoten,
wobei das Bestimmen (520) des Pfades für die Weiterleitung des Datenflusses umfasst:
Bestimmen einer Länge eines Kandidatenpfades zwischen dem Eingangsknoten und dem Ausgangsknoten des Netzwerks;
Bestimmen, ob die Länge des Kandidatenpfades kleiner als ein Längenschwellenwert ist; und
als Reaktion darauf, dass die Länge des Kandidatenpfades kleiner als der Längenschwellenwert ist, Bestimmen des Kandidatenpfades als den Pfad für die Weiterleitung des Datenflusses.

9. Gerät (800), umfassend die Vorrichtung nach Anspruch 8, wobei das Gerät umfasst:
mindestens einen Prozessor (810); und
mindestens einen Speicher (820) mit Computerprogrammcodes (830);
wobei der mindestens eine Speicher (820) und die Computerprogrammcodes (830) dazu konfiguriert sind, mit dem mindestens einen Prozessor (810) die Vorrichtung dazu zu veranlassen, mindestens:
die Dienstkette für die Verarbeitung des Datenflusses an einem Controller zu bestimmen;
den Pfad für die Weiterleitung des Datenflusses zwischen dem Eingangsknoten und dem Ausgangsknoten des Netzwerks zu bestimmen;
die Informationen über die Zuordnung zu erzeugen; und die Informationen über die Zuordnung an den Eingangsknoten (110₀) zu übermitteln.

10. Gerät (800) nach Anspruch 9, wobei das Gerät (800) veranlasst wird, die Dienstkette zu bestimmen durch:
Ermitteln eines Typs des Datenflusses;
Bestimmen einer Netzwerkrichtlinie entsprechend dem Typ des Datenflusses; und
Bestimmen der Zielfunktion auf der Grundlage der Netzwerkrichtlinie.

11. Gerät (800) nach Anspruch 9, wobei das Gerät (800) veranlasst wird, die Informationen über die Zuordnung zu erzeugen durch:
Bestimmen eines nächsten Knotens des Zwischenknotens, an den der Datenfluss vom Zwischenknoten weitergeleitet werden soll; und
Erzeugen von Informationen, die angeben, dass der Datenfluss mit der Zielfunktion am Zwischenknoten verarbeitet werden soll und dass der verarbeitete Datenfluss an den nächsten Knoten weitergeleitet werden soll.

12. Gerät (800) nach Anspruch 9, wobei das Gerät (800) ferner veranlasst wird:
die Informationen über die Zuordnung an den Eingang des Netzwerks zu übermitteln.

13. Vorrichtung zur Verarbeitung eines Datenflusses, umfassend:
Mittel zum, als Reaktion auf den Empfang eines Datenflusses an einem Zwischenknoten in einem Netzwerk, Erlangen von Informationen von einem Controller über eine Zuordnung zwischen einer Dienstkette zur Verarbeitung des Datenflusses und einem Pfad für die Weiterleitung des Datenflusses zwischen einem Eingangsknoten und einem Ausgangsknoten des Netzwerks, wobei die Dienstkette eine Zielfunktion umfasst, die für den Datenfluss im Netzwerk auszuführen ist, wobei der Pfad einen Zwischenknoten des Netzwerks zur Ausführung der Zielfunktion angibt;
Mittel zum Bestimmen, ob die Zielfunktion am Zwischenknoten auf der Grundlage der Informationen über die Zuordnung auszuführen ist; und
Mittel zum, als Reaktion auf die Bestimmung, dass die Zielfunktion am Zwischenknoten auszuführen ist, Verarbeiten des Datenflusses mit der Zielfunktion am Zwischenknoten, wobei das Ausführen der Zielfunktion für den Datenfluss am Zwischenknoten umfasst:
Bestimmen, ob die Zielfunktion am Zwischenknoten vorhanden ist; und
als Reaktion auf die Bestimmung, dass die Zielfunktion am Zwischenknoten nicht vorhanden ist, Erlangen der Zielfunktion von einem weiteren Zwischenknoten, der für den Zwischenknoten zugänglich ist.

14. Gerät (800), umfassend die Vorrichtung nach Anspruch 13, wobei das Gerät umfasst:
mindestens einen Prozessor (810); und
mindestens einen Speicher (820) mit Computerprogrammcodes;
wobei der mindestens eine Speicher und die Computerprogrammcodes dazu konfiguriert sind, mit dem mindestens einen Prozessor die Vorrichtung dazu zu veranlassen, mindestens:
als Reaktion auf den Empfang des Datenflusses am Zwischenknoten im Netzwerk, die Informationen über die Zuordnung zu erlangen;
zu bestimmen, ob die Zielfunktion am Zwischenknoten auf der Grundlage der Informationen über die Zuordnung auszuführen ist; und
als Reaktion auf die Bestimmung, dass die Zielfunktion am Zwischenknoten auszuführen ist, den Datenfluss mit der Zielfunktion am Zwischenknoten zu verarbeiten.

15. Gerät (800) nach Anspruch 14, wobei das Gerät veranlasst wird, die Zielfunktion vom weiteren Zwischenknoten zu erlangen durch:
Bestimmen eines Kandidatenknotens, der die Zielfunktion umfasst, wobei der Kandidatenknoten ein Zwischenknoten des Netzwerks ist;
als Reaktion darauf, dass ein Abstand zwischen dem Kandidatenknoten und dem Zwischenknoten kleiner als ein Schwellenabstand ist, Erlangen der Zielfunktion vom Kandidatenknoten; und
Aktivieren der Zielfunktion am Zwischenknoten.

16. Gerät (800) nach Anspruch 15, wobei das Gerät ferner veranlasst wird:
auf der Grundlage der Informationen der Zuordnung einen nächsten Knoten des Zwischenknotens zu bestimmen, an den der Datenfluss vom Zwischenknoten weitergeleitet werden soll; und
den verarbeiteten Datenfluss an den nächsten Knoten weiterzuleiten.

17. Nicht flüchtiges computerlesbares Medium (900) mit Programmanweisungen (830) zum Veranlassen einer Vorrichtung, mindestens das Verfahren nach einem der Ansprüche 1 bis 4 auszuführen.

18. Nicht flüchtiges computerlesbares Medium (900) mit Programmanweisungen (830) zum Veranlassen einer Vorrichtung, mindestens das Verfahren nach einem der Ansprüche 5 bis 7 auszuführen.

## Revendications

1. Procédé (500), comprenant :
la détermination (510), au niveau d'un contrôleur, d'une chaîne de services pour le traitement d'un flux de données, la chaîne de services comprenant une fonction cible à exécuter pour le flux de données dans un réseau ;
la détermination (520), au niveau du contrôleur, d'un chemin pour l'acheminement du flux de données entre un nœud d'entrée (110₀) et un nœud de sortie (110₅) du réseau, le chemin indiquant un nœud intermédiaire du réseau pour l'exécution de la fonction cible ; et
la génération (530), au niveau du contrôleur, d'informations sur une association entre la chaîne de services et le chemin, et la transmission des informations sur l'association au nœud intermédiaire,
dans lequel la détermination (520) du chemin pour l'acheminement du flux de données comprend :
la détermination d'une longueur d'un chemin candidat entre le nœud d'entrée et le nœud de sortie du réseau ;
la détermination si la longueur du chemin candidat est inférieure à un seuil de longueur ; et
en réponse à la longueur du chemin candidat étant inférieure au seuil de longueur, la détermination du chemin candidat comme chemin pour l'acheminement du flux de données.

2. Procédé (500) selon la revendication 1, dans lequel la détermination de la chaîne de services comprend :
l'obtention d'un type du flux de données ;
la détermination d'une politique réseau correspondant au type du flux de données ; et
la détermination de la fonction cible sur la base de la politique réseau.

3. Procédé (500) selon la revendication 1, dans lequel la génération des informations sur l'association comprend :
la détermination d'un nœud suivant du nœud intermédiaire vers lequel le flux de données doit être acheminé depuis le nœud intermédiaire ; et
la génération d'informations indiquant que le flux de données doit être traité avec la fonction cible au niveau du nœud intermédiaire et que le flux de données traité doit être acheminé vers le nœud suivant.

4. Procédé (500) selon la revendication 1, comprenant en outre :
la transmission des informations sur l'association à l'entrée du réseau.

5. Procédé (600), comprenant :
en réponse à la réception d'un flux de données au niveau d'un nœud intermédiaire dans un réseau, l'obtention (610), au niveau du nœud intermédiaire, d'informations provenant d'un contrôleur sur une association entre une chaîne de services pour le traitement du flux de données et un chemin pour l'acheminement du flux de données entre un nœud d'entrée (110₀) et un nœud de sortie (110₅) du réseau, la chaîne de services comprenant une fonction cible à exécuter pour le flux de données dans le réseau, le chemin indiquant un nœud intermédiaire du réseau pour l'exécution de la fonction cible ;
la détermination (620), au niveau du nœud intermédiaire, si la fonction cible doit être exécutée au niveau du nœud intermédiaire sur la base des informations sur l'association ; et
en réponse à la détermination que la fonction cible doit être exécutée au niveau du nœud intermédiaire, le traitement (630), au niveau du nœud intermédiaire, du flux de données avec la fonction cible au niveau du nœud intermédiaire
, dans lequel l'exécution de la fonction cible pour le flux de données au niveau du nœud intermédiaire comprend :
la détermination si la fonction cible existe au niveau du nœud intermédiaire ; et
en réponse à la détermination que la fonction cible n'existe pas au niveau du nœud intermédiaire, l'obtention de la fonction cible depuis un autre nœud intermédiaire accessible au nœud intermédiaire.

6. Procédé (600) selon la revendication 5, dans lequel l'obtention de la fonction cible depuis l'autre nœud intermédiaire comprend :
la détermination d'un nœud candidat comprenant la fonction cible, le nœud candidat étant un nœud intermédiaire du réseau ;
en réponse à une distance entre le nœud candidat et le nœud intermédiaire étant inférieure à une distance seuil, l'obtention de la fonction cible depuis le nœud candidat ; et
l'activation de la fonction cible au niveau du nœud intermédiaire.

7. Procédé (600) selon la revendication 5, comprenant en outre :
la détermination (640), sur la base des informations de l'association, d'un nœud suivant du nœud intermédiaire vers lequel le flux de données doit être acheminé depuis le nœud intermédiaire ; et
l'acheminement du flux de données traité vers le nœud suivant.

8. Appareil pour le traitement d'un flux de données, comprenant :
des moyens pour déterminer (510), au niveau d'un contrôleur, une chaîne de services pour le traitement d'un flux de données, la chaîne de services comprenant une fonction cible à exécuter pour le flux de données dans un réseau ;
des moyens pour déterminer (520) un chemin pour l'acheminement du flux de données entre un nœud d'entrée (110₀) et un nœud de sortie (110₅) du réseau, le chemin indiquant un nœud intermédiaire du réseau pour l'exécution de la fonction cible ;
des moyens pour générer (530) des informations sur une association entre la chaîne de services et le chemin ; et des moyens pour transmettre les informations sur l'association au nœud intermédiaire,
dans lequel la détermination (520) du chemin pour l'acheminement du flux de données comprend :
la détermination d'une longueur d'un chemin candidat entre le nœud d'entrée et le nœud de sortie du réseau ;
la détermination si la longueur du chemin candidat est inférieure à un seuil de longueur ; et
en réponse à la longueur du chemin candidat étant inférieure au seuil de longueur, la détermination du chemin candidat comme chemin pour l'acheminement du flux de données.

9. Dispositif (800), comprenant l'appareil selon la revendication 8, dans lequel le dispositif comprend :
au moins un processeur (810) ; et
au moins une mémoire (820) incluant des codes de programme informatique (830) ;
l'au moins une mémoire (820) et les codes de programme informatique (830) sont configurés pour, avec l'au moins un processeur (810), amener l'appareil au moins à :
déterminer, au niveau d'un contrôleur, la chaîne de services pour le traitement du flux de données ;
déterminer le chemin pour l'acheminement du flux de données entre le nœud d'entrée et le nœud de sortie du réseau ;
générer les informations sur l'association ; et transmettre les informations sur l'association au nœud d'entrée (110₀).

10. Dispositif (800) selon la revendication 9, dans lequel le dispositif (800) est amené à déterminer la chaîne de services en :
obtenant un type du flux de données ;
déterminant une politique réseau correspondant au type du flux de données ; et
déterminant la fonction cible sur la base de la politique réseau.

11. Dispositif (800) selon la revendication 9, dans lequel le dispositif (800) est amené à générer les informations sur l'association en :
déterminant un nœud suivant du nœud intermédiaire vers lequel le flux de données doit être acheminé depuis le nœud intermédiaire ; et
générant des informations indiquant que le flux de données doit être traité avec la fonction cible au niveau du nœud intermédiaire et que le flux de données traité doit être acheminé vers le nœud suivant.

12. Dispositif (800) selon la revendication 9, dans lequel le dispositif (800) est en outre amené à :
transmettre les informations sur l'association à l'entrée du réseau.

13. Appareil pour le traitement d'un flux de données, comprenant :
des moyens pour, en réponse à la réception d'un flux de données au niveau d'un nœud intermédiaire dans un réseau, obtenir des informations provenant d'un contrôleur sur une association entre une chaîne de services pour le traitement du flux de données et un chemin pour l'acheminement du flux de données entre un nœud d'entrée et un nœud de sortie du réseau, la chaîne de services comprenant une fonction cible à exécuter pour le flux de données dans le réseau, le chemin indiquant un nœud intermédiaire du réseau pour l'exécution de la fonction cible ;
des moyens pour déterminer si la fonction cible doit être exécutée au niveau du nœud intermédiaire sur la base des informations sur l'association ; et
des moyens pour, en réponse à la détermination que la fonction cible doit être exécutée au niveau du nœud intermédiaire, traiter le flux de données avec la fonction cible au niveau du nœud intermédiaire, dans lequel l'exécution de la fonction cible pour le flux de données au niveau du nœud intermédiaire comprend :
la détermination si la fonction cible existe au niveau du nœud intermédiaire ; et
en réponse à la détermination que la fonction cible n'existe pas au niveau du nœud intermédiaire, l'obtention de la fonction cible depuis un autre nœud intermédiaire accessible au nœud intermédiaire.

14. Dispositif (800), comprenant l'appareil selon la revendication 13, dans lequel le dispositif comprend :
au moins un processeur (810) ; et
au moins une mémoire (820) incluant des codes de programme informatique ;
l'au moins une mémoire et les codes de programme informatique sont configurés pour, avec l'au moins un processeur, amener l'appareil au moins à :
en réponse à la réception du flux de données au niveau du nœud intermédiaire dans le réseau, obtenir les informations sur l'association ;
déterminer si la fonction cible doit être exécutée au niveau du nœud intermédiaire sur la base des informations sur l'association ; et
en réponse à la détermination que la fonction cible doit être exécutée au niveau du nœud intermédiaire, traiter le flux de données avec la fonction cible au niveau du nœud intermédiaire.

15. Dispositif (800) selon la revendication 14, dans lequel le dispositif est amené à obtenir la fonction cible depuis l'autre nœud intermédiaire en :
déterminant un nœud candidat comprenant la fonction cible, le nœud candidat étant un nœud intermédiaire du réseau ;
en réponse à une distance entre le nœud candidat et le nœud intermédiaire étant inférieure à une distance seuil, obtenant la fonction cible depuis le nœud candidat ; et
activant la fonction cible au niveau du nœud intermédiaire.

16. Dispositif (800) selon la revendication 15, dans lequel le dispositif est en outre amené à :
déterminer, sur la base des informations de l'association, un nœud suivant du nœud intermédiaire vers lequel le flux de données doit être acheminé depuis le nœud intermédiaire ; et
acheminer le flux de données traité vers le nœud suivant.

17. Support informatique non transitoire lisible par ordinateur (900) comprenant des instructions de programme (830) pour amener un appareil à exécuter au moins le procédé selon l'une quelconque des revendications 1 à 4.

18. Support informatique non transitoire lisible par ordinateur (900) comprenant des instructions de programme (830) pour amener un appareil à exécuter au moins le procédé selon l'une quelconque des revendications 5 à 7.
